(19) Europäisches Patentamt

European Patent Office

Office européen des brevets

(11) **EP 0 967 010 B1**

(12) **FASCICULE DE BREVET EUROPEEN**

(45) Date de publication et mention
de la délivrance du brevet:
**08.02.2006 Bulletin 2006/06**

(51) Int Cl.:
*B01J 27/04* (2006.01)   *C10G 49/02* (2006.01)
*C10G 49/08* (2006.01)   *B01J 37/20* (2006.01)

(21) Numéro de dépôt: **99401510.5**

(22) Date de dépôt: **18.06.1999**

(54) **Procédé de préparation d'un catalyseur sulfuré d'au moins un élément choisi dans les groupes IIIB, IVB,VB**

Herstellung eines ein Element der Gruppen IIIB, IVB, VB enthaltenden, sulfidierten Katalysators

Preparation of a sulfided catalyst comprising at least one element chosen from groups IIIB, IVB, VB

(84) Etats contractants désignés:
**BE DE DK ES NL**

(30) Priorité: **25.06.1998 FR 9808049**

(43) Date de publication de la demande:
**29.12.1999 Bulletin 1999/52**

(73) Titulaire: **Institut Français du Pétrole
92852 Rueil-Malmaison Cedex (FR)**

(72) Inventeur: **Kasztelan, Slavik
92500 Rueil Malmaison (FR)**

(56) Documents cités:
**EP-A- 0 453 367        FR-A- 2 372 149
FR-A- 2 758 278       US-A- 3 592 760
US-A- 4 560 804       US-A- 4 687 568**

Printed by Jouve, 75001 PARIS (FR)

**Description**

La présente invention concerne un procédé de préparation d'un catalyseur sulfuré d'hydroraffinage ou d'hydroconversion supporté contenant au moins un sulfure d'au moins un élément choisi parmi le groupe IITB y compris les lanthanides et les actinides, le groupe IVB, le groupe VB (groupe 3, 4 et 5 selon la nouvelle notation de la classification périodique des éléments : Handbook of Chemistry and Physics, 76ème édition, 1995-1996, intérieur 1ère page de couverture), associé à au moins une matrice poreuse généralement de type oxyde amorphe ou mal cristallisé. Le catalyseur contient en outre éventuellement au moins un tamis moléculaire zéolithique ou non zéolithique et éventuellement au moins un élément du groupe VIII (groupe 8, 9 et 10 selon la nouvelle notation de la classification périodique des éléments) et éventuellement au moins un élément choisi dans le groupe : P, B, et Si, et éventuellement au moins un élément du groupe VIIA (groupe 17). Le catalyseur comprend une quantité de souffre telle que le taux de sulfuration est supérieur à 40 %. L'invention concerne également le procédé de préparation du catalyseur sulfure caractérisé en ce que le catalyseur est sulfuré par un mélange contenant au moins une source de soufre élémentaire et au moins une source de carbone sous une atmosphère autogène et/ou inerte.

Les catalyseurs sulfures sont utilisables pour l'hydroraffinage et l'hydrocraquage de charges hydrocarbonées contenant au moins un composé de type aromatique, et/ou oléfinique, et/ou naphténique, et/ou paraffinique, les dites charges contenant éventuellement des métaux, et/ou de l'azote, et/ou de l'oxygène et/ou du soufre.

Les sulfures de métaux de transition et de terres rares (lanthanides) trouvent aussi des applications comme lubrifiants, pigments, électrodes pour batteries électriques, matériaux pour détecteurs de soufre, matériaux aux propriétés optiques spécifiques, additifs pour matériaux luminescents, et revêtements anticorrosion dans des atmosphères contenant du soufre.

La synthèse de sulfures peut être réalisée par de nombreuses méthodes bien connues de l'homme du métier.

La synthèse des sulfures des métaux de transition ou de terres rares cristallisés par réaction des éléments de type métaux de transition ou terres rares avec le soufre élémentaire à haute température est un procédé bien connu en chimie du solide par l'homme de l'art mais coûteux en particulier pour une application industrielle.

La synthèse de sulfures par réaction d'un précurseur approprié sous la forme d'oxyde mixte des métaux de transition et/ou de terres rares imprégné avec un composé du soufre en phase liquide suivi d'un traitement sous hydrogène dans un réacteur à lit traversé est bien connue de l'homme de l'art.

La synthèse de catalyseurs sulfures sur une matrice poreuse par traitement d'un précurseur oxyde massique ou supporté sur une matrice poreuse sous hydrogène avec une charge hydrocarbonée soufrée et en particulier les coupes pétrolières soufrées telles que essence, kérosène, gazole, auxquelles on rajoute éventuellement un composé du soufre, par exemple le dimethyl disulfure, est également bien connue de l'homme de l'art.

La synthèse de sulfures massiques peut être également réalisée par la technique de coprécipitation en milieu basique de complexes soufrés en solution contenant les deux cations. Cette méthode peut être mise en oeuvre à pH contrôlé et se dénomme précipitation homogène de sulfure. Elle a été employée pour préparer un sulfure mixte de cobalt et de molybdène (G. Hagenbach, P. Courty, B. Delmon, Journal of Catalysis, volume 31, page 264, 1973).

La synthèse de catalyseurs sulfures massiques ou supportés sur une matrice poreuse par traitement d'un précurseur oxyde massique ou supporté sur une matrice poreuse sous un mélange hydrogène/hydrogène sulfuré ou azote/hydrogène sulfuré est également bien connue de l'homme de l'art.

Le brevet US 4,491,639 décrit la préparation de composé sulfuré par réaction avec le soufre élémentaire de sels de V, Mo, W et en particulier des sulfures de V, Mo et W contenant éventuellement au moins un des éléments de la série C, Si, B, Ce, Th, Nb, Zr, Ta, U en association avec Co ou Ni.

D'autres méthodes ont été proposées pour la synthèse de sulfures simples. Par exemple la synthèse des sulfures simples de terres rares cristallisés décrite dans les brevets US 3,748,095 et FR 2100551 procède par réaction de l'hydrogène sulfuré ou du sulfure de carbone sur un oxyde ou un oxycarbonate amorphe de terre rare à une température supérieure à 1000°C.

Les brevets EP 0440516A1 et US 5,279,801 décrivent quant à eux, un procédé de synthèse de composés soufrés simples des métaux de transition ou de terres rares par réaction d'un composé des métaux de transition ou de terres rares avec un composé carboné du soufre à l'état gazeux, en enceinte fermée à une température modérée de 350°C à 600°C.

Il est bien connu cependant que certains éléments tels que les éléments du groupe IIIB, y compris les lanthanides et les actinides, du groupe IVB, du groupe VB, sont très difficiles à sulfurer. Les méthodes de sulfuration bien connues de l'homme de l'art et couramment employées industriellement et en laboratoire, telles que la sulfuration sous mélange gazeux hydrogène/hydrogène sulfuré ou la sulfuration en phase liquide sous pression d'hydrogène par un mélange d'une charge hydrocarbure et d'un composé soufré tel que le dimethyl disulfure sont ainsi inefficaces pour sulfurer de tels solides.

Les importants travaux de recherche effectués par le demandeur sur la préparation de catalyseurs sulfures à base de sulfures des éléments des groupes IIIB, IVB, VB et de nombreux autres éléments de la Classification périodique des éléments, seuls ou en mélange, associés à une matrice, l'ont conduit à découvrir que, de façon surprenante, en faisant réagir simultanément du soufre élémentaire et du carbone sur une poudre contenant au moins un élément choisi parmi le groupe IIIB, y compris les lanthanides et les actinides, le groupe IVB, le groupe VB, et éventuellement au moins un élément du groupe VIII, en enceinte fermée ou ouverte sous une atmosphère autogène ou inerte, on obtient un composé sulfure amorphe ou cristallisé avec un taux de sulfuration supérieur à 40 %. Sans vouloir être lié par une quelconque théorie, il semble que la sulfuration soit obtenue par une réduction du composé précurseur contenant le ou les éléments choisis parmi le groupe IIIB, y compris les lanthanides et les actinides, le groupe IVB, le groupe VB, et éventuellement au moins un élément du groupe VIII, par le carbone avec simultanément sulfuration de l'élément réduit par le soufre et ceci jusqu'à épuisement du précurseur contenant le ou les éléments choisis parmi le groupe IIIB y compris les lanthanides et les actinides, le groupe IVB, le groupe VB, et éventuellement au moins un élément du groupe VIII.

Ainsi, plus particulièrement, l'invention concerne la préparation des catalyseurs sulfures comprenant au moins un métal du groupe VB et au moins un métal du groupe VIII, dopés avec du bore et/ou du silicium et/ou du phosphore. De même, l'invention concerne plus particulièrement la préparation des catalyseurs sulfures comprenant au moins un métal du groupe IIIB, y compris les lanthanides et les actinides, et au moins un métal du groupe VIII, dopés avec du bore et/ou du silicium et/ou du phosphore.

Les éléments du groupe VB sont choisis parmi le vanadium, le nobium, le tallium, les éléments du groupe IVB sont choisis parmi le titane, le zirconium, le hagnium, de préférence le titane. Les éléments du groupe IIIB sont choisis parmi le yttrium, le lanthane, le cerium, le praséodyme, le neodyme, le samarium, l'europium, le gadolinium, le terbium, le dysprosium, le holmium, l'erbium, le thulium, l'ytterbium, le lutétium, l'actinium, le thorium et l'uranium. Les éléments du groupe VIII sont choisis parmi le fer, le cobalt, le nickel, le ruthénium, le rhodium, le palladium, l'osmium, l'iridium et le platine, de préférence le fer, le cobalt et le nickel.

La quantité de souffre dans le catalyseur préparés selon l'invention est telle que le taux de sulfuration est supérieur à 40 %, et de préférence supérieur à 50 % et de manière encore plus proférée supérieur à 60 %.

On entend par taux de sulfuration au sens de la présente description, la quantité de souffre fixée sur le catalyseur par rapport à la quantité stoechiométrique de souffre dans le composé métallique sulfuré.

Le catalyseur préparés selon la présente invention renferme généralement en % poids par rapport à la masse totale du catalyseur au moins un métal choisi dans les groupes suivants et avec les teneurs suivantes :

- 0,01 à 40%, de préférence de 0,01 à 35% et de manière encore plus préférée de 0,01 à 30% d'au moins un métal choisi parmi les éléments des groupes IIIB, IVB, VB,
- 0,1 à 99%, de préférence 1 à 98% d'au moins un support choisi dans le groupe constitué par les matrices amorphes et les matrices mal cristallisées
- 0,001 à 30%, de préférence de 0,01 à 55% de soufre,
- 0 à 30%, de préférence de 0,01 à 25% d'au moins un métal du groupe VIII, et éventuellement,
- 0 à 90%, de préférence de 0,1 à 85% et de manière encore plus préférée de 0,1 à 80% d'un tamis moléculaire zéolithique ou non,
- 0 à 40%, de préférence de 0,1 à 30% et de manière encore plus préférée de 0,1 à 20% d'au moins un élément choisi dans le groupe constitué par le bore, le silicium et le phosphore.
- 0 à 20%, de préférence de 0,1 à 15% et de manière encore plus préférée de 0,1 à 10% d'au moins un élément choisi dans le groupe VIIA.

L'invention concerne un procédé pour la préparation des catalyseurs sulfurés caractérisé en ce qu'on sulfure le catalyseur par un mélange contenant au moins une source de soufre élémentaire et au moins une source de carbone sous une atmosphère autogène et/ou inerte. Plus précisément, le procédé d'obtention des catalyseurs sulfures selon la présente invention comprend les étapes suivantes :

a) on forme un mélange réactionnel qui renferme : une poudre ou un mélange de poudres contenant au moins un élément choisi parmi le groupe IIIB y compris les lanthanides et les actinides, le groupe IVB, le groupe VB, au moins une matrice poreuse généralement de type oxyde amorphe ou mal cristallisée, éventuellement associée à un tamis moléculaire zéolithique ou non zéolithique, et éventuellement au moins un élément du groupe VIII, et éventuellement au moins une source d'un élément choisi dans le groupe : P, B, et Si, et éventuellement au moins une source d'anions du groupe VIIA et au moins une source de soufre élémentaire et au moins une source de carbone et éventuellement de l'eau.

b) on maintient le mélange réactionnel obtenu après l'étape a) à une température de chauffage supérieure à 40°C sous une pression supérieure à 0,01 MPa dans un réacteur.

Le réacteur peut être un réacteur à enceinte fermée. Dans ce cas le chargement peut se réaliser à l'air libre et après fermeture et réaction, la pression exercée sera la pression autogène des gaz produits par les réactions de réduction et de sulfuration. Le réacteur peut également être chargé sous une atmosphère d'un gaz inerte.

Le réacteur peut éventuellement être un réacteur à lit traversé, tel qu'un lit fixe, un lit mobile, un lit bouillonnant, un lit fluidisé. Dans ce câs la pression exercée est celle d'un gaz inerte.

On utilise de préférence un réacteur à enceinte fermée.

La source de soufre est le soufre élémentaire sous ses différentes formes, par exemple fleur de soufre, soufre en suspension en milieu aqueux ou soufre en suspension en milieu organique.

La source de carbone peut se présenter sous toutes les formes connues de l'homme du métier, par exemple le graphite, le coke de pétrole, le coke de houille, le carbone amorphe, le noir de carbone, les charbons obtenus par combustion partielle ou par décomposition ou encore par déshydrogénation de composés végétaux ou de composés animaux ou encore d'hydrocarbures. La source de carbone contient généralement de l'hydrogène et une de ses caractéristiques est son rapport atomique H/C. On utilisera de préférence une source de carbone ayant un rapport H/C inférieur à 2 et de manière préférée un rapport H/C inférieur à 1,7 et de manière encore plus préférée un rapport H/C inférieur à 1,4.

La réaction est réalisée sous pression autogène ou sous pression d'un gaz inerte. La pression autogène est produite par la génération des produits de réactions tels que CO, $CO_2$, $H_2O$. Le gaz inerte peut renfermer au moins un des composés suivants, de l'azote, un gaz rare tel que l'hélium, le néon, l'argon, le krypton, le xénon ou le radon, de l'eau surchauffée ou encore une combinaison d'au moins deux de ces composés.

Parmi les composés contenant au moins un élément dont le numéro atomique est compris dans l'ensemble constitué des éléments du groupe IIIB incluant les lanthanides et les actinides, du groupe IVB et du groupe VB, éventuellement du groupe VIII, on peut utiliser les oxydes, les hydroxydes, les oxyhydroxydes, les acides, Les polyoxométallates, les alkoxydes, les oxalates, les sels d'ammonium, les nitrates, les carbonates, les hydroxycarbonates, les carboxylates, les halogénures, les oxyhalogénures, les phosphates, les thiosels en particulier d'ammonium. On utilise de préférence les oxydes et les sels des métaux de transition, des lanthanides et des actinides.

La source de phosphore préférée est l'acide phosphorique $H_3PO_4$, mais ses sels, et ses esters comme les phosphates alcalins, phosphates d'ammonium, conviennent également. Le phosphore peut par exemple être introduit sous la forme d'un mélange d'acide phosphorique et d'un composé organique basique contenant de l'azote telle que l'ammoniac, les amines primaires et secondaires, les amines cycliques, les composés de la famille de la pyridine, les composés de la famille des quinoléines et les composés de la famille du pyrrole.

De nombreuses sources de silicium peuvent être employées. Ainsi, on peut utiliser un hydrogel, un aérogel ou une suspension colloïdale d'oxyde de silicium, les oxydes de précipitation, les oxydes provenant de l'hydrolyse d'esters tels que l'orthosilicate d'éthyle $Si(OEt)_4$, les silanes et polysilanes, les siloxanes et polysiloxanes, les silicates d'halogénures comme le fluorosilicate d'ammonium $(NH_4)_2SiF_6$ ou le fluorosilicate de sodium $Na_2SiF_6$. Le silicium peut être ajouté par exemple par imprégnation de silicate d'éthyle en solution dans un alcool.

La source de bore peut être un sel de bore amorphe, tel que le biborate ou le pentaborate d'ammonium, le borate d'aluminium. Le bore peut être introduit par exemple par une solution d'acide borique dans un alcool.

Les sources d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les anions chlorures peuvent être introduits sous la forme d'acide chlorhydrique, ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide chlorhydrique.

La matrice minérale poreuse habituellement amorphe ou mal cristallisée est habituellement choisie dans le groupe formé par l'alurnine, la silice, la silice-alumine, ou un mélange d'au moins deux des oxydes cités ci-dessus. On préfère utiliser des matrices contenant de l'alumine, sous toutes ses formes connues de l'homme du métier, par exemple l'alumine gamma.

Le catalyseur peut également renfermer en outre au moins un composé choisi dans le groupe formé par la famille des tamis moléculaires de type aminosillicate cristallisé ou zéolithes synthétiques ou naturelles telles que la zéolithe Y, X, L, la zéolithe bêta, la mordénite, les zéolithes oméga, Nu-10, TON, ZSM-22, ZSM-5.

La première étape du procédé de sulfuration selon l'invention consiste à réaliser le mélange de la source de soufre élémentaire et la source de carbone et d'une poudre contenant un ou des composés comprenant au moins un élément choisi parmi le groupe IIIB, y compris les lanthanides et les actinides, le groupe IVB, le groupe VB, la matrice poreuse et éventuellement au moins un élément du groupe VIII, éventuellement au moins un élément choisi parmi P, B et Si, éventuellement au moins un anion du groupe VIIA. Cette première étape peut être réalisée en plusieurs fois.

La matrice peut être préalablement mise en forme et calcinée avant introduction dans le mélange. La mise en forme peut être réalisée par exemple par extrusion, par pastillage, par la méthode de la goutte d'huile (oil-drop), par granulation au plateau tournant ou par toute autre méthode bien connue de l'homme du métier. La matrice préformée est alors habituellement calcinée sous air, usuellement à une température d'au moins 100°C, couramment d'environ 200 à 1000°C.

La matrice peut être préalablement imprégnée par le sel du métal de transition ou de terre rare, ou un sel contenant l'élément choisi parmi P, B et Si ou l'anion du groupe VIIA. D'autres composés du phosphore peuvent être utilisés comme il est bien connu de l'homme du métier.

L'imprégnation de la matrice est de préférence effectuée par la méthode d'imprégnation dite "à sec" bien connue de l'homme du métier.

L'imprégnation peut être effectuée en une seule étape par une solution contenant l'ensemble des éléments constitutifs du catalyseur final.

Les éléments choisis parmi le groupe IIIB, y compris les lanthanides et les actinides, le groupe IVB, le groupe VB et le groupe VIII, de même que le (ou les) élément(s) choisi(s) dans le groupe formé par P, B et Si, et le (ou les) élément(s) choisi(s) parmi les anions du groupe VIIA, peuvent être introduits par une ou plusieurs opérations d'échange ionique sur la matrice choisie, à l'aide d'une solution contenant au moins un sel précurseur de métal de transition ou de terre rare.

Dans le cas où les métaux sont introduits en plusieurs imprégnations des sels précurseurs correspondants, une étape de séchage intermédiaire du catalyseur devra être effectuée à une température comprise entre 60 et 250°C.

Le mélange des poudres contenant tout ou partie des ingrédients peut être mis en forme par exemple par extrusion, par pastillage, par la méthode de la goutte d'huile (oil-drop), par granulation au plateau tournant ou par toute autre méthode bien connue de l'homme du métier.

La seconde étape consiste en la réaction du mélange formé dans la première étape pour obtenir le composé soufré. Une première méthode pour réaliser la réaction consiste à chauffer le mélange de poudres à une température comprise entre 40 et 1000°C, de préférence entre 60 et 700°C, sous pression autogène. On utilise de préférence un autoclave en acier résistant à la corrosion par les composés du soufre. La durée du chauffage du mélange réactionnel nécessaire à la sulfuration dépend de la composition du mélange réactionnel et de la température de réaction.

Les catalyseurs sulfures obtenus par la présente invention sont utilisés comme catalyseurs pour l'hydrogénation, l'hydrodéazotation, l'hydrodéoxygénation, l'hydrodéaromatisation, l'hydrodésulfuration, l'hydrodémétallisation, l'hydro isomérisation, et l'hydrocraquage de charges hydrocarbonées contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre. Dans ces utilisations, les catalyseurs obtenus par la présente invention présentent une activité améliorée par rapport à l'art antérieur.

Les charges employées dans le procédé d'hydrotraitement et d'hydrocraquage sont des essences, des kérosènes, des gas-oils, des gas-oils sous vide, des résidus désasphaltés ou non, des huiles paraffiniques, des cires et paraffines. Elles peuvent contenir des hétéroatomes tels que soufre, oxygène et azote et des métaux. La température de réaction est en général supérieure à 200°C et souvent comprise entre 280°C et 480°C. La pression est supérieure à 0,1 MPa et en général supérieure à 5 MPa. Le taux de recyclage d'hydrogène est au minimum de 80, et souvent compris entre 200 et 4000, litres d'hydrogène par litre de charge. La vitesse volumique horaire est comprise en général entre 0,1 et 20 h$^{-1}$.

Les résultats qui importent au raffineur sont l'activité en hydrodésulfuration (HDS), en hydrodésazotation (HDN) et en conversion. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que l'activité peut être augmentée par une élévation de température, mais c'est souvent au détriment de la stabilité du catalyseur. La stabilité ou durée de vie s'améliore avec une augmentation de la pression ou du taux de recyclage d'hydrogène, mais ceci se fait au détriment de l'économie du procédé.

Les exemples suivants illustrent la présente invention sans toutefois en limiter la portée.

Exemple 1

Préparation du support alumine entrant dans la composition des catalyseurs

On a fabriqué un support à base d'alumine de façon à pouvoir préparer les catalyseurs décrits ci-après à partir du support mis en forme. Pour ce faire, on a utilisé une matrice composée de boehmite tabulaire ultrafine ou gel d'alumine commercialisée sous le nom SB3 par la société Condéa Chemie GmbH. Ce gel a été mélangé à une solution aqueuse contenant de l'acide nitrique à 66% (7% poids d'acide par gramme de gel sec), puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 243 $m^2$/g, un volume poreux de 0,61 $cm^3$/g et une distribution en taille de pore monomodale centrée sur 10 nm. L'analyse de la matrice par la diffraction des rayons X révèle que celle-ci est composée uniquement d'alumine gamma cubique de faible cristallinité.

Exemple 2

Préparation d'un catalyseur d'hydrotraitement Nb /alumine.

On a ajouté du niobium sur le support alumine extrudé de l'exemple 1. par imprégnation à sec d'une solution de pentaoxyde de niobium $Nb(OEt)_5$ dans l'éthanol. Après imprégnation à sec, les extrudés sont séchés une nuit à 80°C. Le catalyseur Nb/alumine obtenu est préparé avec une teneur finale en pentaoxyde de diniobium de 13,1% poids.

Exemple 3

Préparation d'un catalyseur d'hydrotraitement CoNb /alumine.

On a ajouté du cobalt sur le catalyseur Nb/alumine de l'exemple 2 par imprégnation à sec d'une solution de nitrate de cobalt $Co(NO_3)_2.6H_2O$ de manière à obtenir une teneur finale en oxyde de cobalt CoO de 2,9 % poids. Après imprégnation à sec, les extrudés sont séchés une nuit à 80°C. Le catalyseur CoNb/alumine obtenu contient 12,7 % poids de $Nb_2O_5$ et 2,8 % poids de CoO.

Exemple 4

Préparation de catalyseurs CoNb B/alumine

On ajoute ensuite sur le catalyseur CoNb/alumine une quantité de 1 % de bore par imprégnation de biborate d'ammonium en solution dans l'eau. Le catalyseur est ensuite séché sous air sec à 80°C pendant une nuit et ensuite calciné sous air à 460°C pendant deux heures. On obtient ainsi le catalyseur CoNbB/alumine contenant 12,5 % de $Nb_2O_5$, 2,7 % de CoO, 0,95 % de B.

Exemple 5

préparation d'un catalyseur CoNbF/alumine

On ajoute ensuite sur le catalyseur CoNb/alumine une quantité de 1 % de Fluor par imprégnation de fluorure d'ammonium $NH_3F$ en solution dans l'eau.
Le catalyseur est ensuite séché sous air sec à 80°C pendant une nuit et ensuite calciné sous air à 500°C pendant deux heures. On obtient ainsi le catalyseur CoNbF/alumine comprenant 12, 7 % de $Nb_2O_5$, 2,8 % de CoO, 0,92 % de F.

Exemple 6

Préparation d'un catalyseur CoNbP/alumine

On ajoute ensuite sur le catalyseur CoNb/alumine une quantité de 1,5 % de phosphore par imprégnation d'acide phosphorique.
Le catalyseur est ensuite séché sous air sec à 80°C pendant une nuit et ensuite calciné sous air à 500°C pendant deux heures. On obtient ainsi le catalyseur CoNbP/alumine comprenant 12,5 % de $Nb_2O_5$, 2,65 % de CoO, 1,45 % de P.

Exemple 7

Préparation d'un catalyseur CoNbSi/alumine

On ajoute ensuite sur le catalyseur CoNb/alumine une quantité de 1,5 % de silicium par imprégnation d'huile de silicone Rhodorsyl E1P.
Le catalyseur est ensuite séché sous air sec à 80°C pendant une nuit et ensuite calciné sous air à 500°C pendant deux heures. On obtient ainsi le catalyseur CoNbSi/alumine comprenant 12,5 % de $Nb_2O_3$, 2,57 % de CoO, 1,37 % de Si.

Exemple 8

Préparation d'un catalyseur d'hydrotraitement Ce/alumine.

On a ajouté du cérium sur le support alumine extrudé de l'exemple 1 par imprégnation à sec d'une solution de nitrate de cérium Ce(NO$_3$)$_4$.$\times$H$_2$O. Après imprégnation à sec, les extrudés sont séchés une nuit à 80°C puis calcinés à 350°C pendant 2 heures sous air sec. Le catalyseur Ce/alumine obtenu est préparé avec une teneur finale en CeO$_2$ de 5,1% poids.

Exemple 9

Préparation d'un catalyseur d'hydrotraitement CoCe/alumine.

On a imprégné à sec le catalyseur de l'exemple 8 par une solution aqueuse de nitrate de cobalt Co(NO$_3$)$_2$.6H$_2$O. Après maturation à température ambiante dans une atmosphère saturée en eau, les extrudés imprégnés sont séchés pendant une nuit à 80°C puis calcinés à 350°C pendant 2 heures sous air sec. La teneur finale en oxyde de cérium est de 14,5% poids. La teneur finale en oxyde de cobalt CoO est de 2,0% poids.

Exemple 10

Sulfuration S1 des catalyseurs (conforme à l'invention).

On introduit 50 g de catalyseur fraîchement calciné dans un autoclave et on ajoute la quantité de poudre de soufre élémentaire (soufre sublimé de chez AUROS, ref. 2012546) correspondant à 120% de la stoechiométrie théorique de la réaction et la quantité de poudre de carbone (carbon NORIT, 211, 660 m2/g de chez AUROS, ref. 4040250) correspondant à 110% de la stoechiométrie théorique basée sur la formation de CoS, NbS$_2$, Ce$_2$S$_4$ à partir de CoO, Nb$_2$O$_5$, et CeO$_2$ respectivement selon le type de catalyseur des exemples 2 à 9.
On ferme ensuite l'autoclave et on chauffe à 400°C pendant 10 heures. Après refroidissement, on dépressurise l'autoclave en pompant les gaz qu'il contient, on referme l'autoclave et on le transfère dans une boite à gants sous atmosphère inerte afin de protéger le produit de la réaction de l'oxydation par l'oxygène de l'air. Après ouverture, on récupère les extrudés de couleur noire, que l'on conserve sous gaz inerte en ampoule scellée.
Les quantités de soufre élémentaire et de poudre de carbone utilisées pour la sulfuration S1 de 50 g de chaque catalyseur des exemples 2 à 9 sont indiquées dans le tableau 1. Les quantités de soufre fixées et les quantités de carbone résiduelles sur les catalyseurs sulfurés sont également reportées dans le tableau 1. On constate dans ce tableau que la méthode de sulfuration S1 permet d'obtenir un taux de sulfuration très satisfaisant du métal du groupe VB, le niobium, et du métal du groupe des lanthanides, le cérium, lorsque ceux-ci sont supportés sur alumine.
Le taux de sulfuration est maintenu en présence d'un élément choisi parmi le groupe P, B, Si et le F.

Tableau 1

| Catalyseur | Quantité de soufre (g/50g cata.) | Quantité de carbone (g/50g cata.) | Teneur en S après sulfuration (% pds) | Teneur en C après sulfuration (% pds) | Taux de sulfuration (%) |
|---|---|---|---|---|---|
| Nb | 3,78 | 0,98 | 5,90 | 1,7 | 100 |
| CoNb | 4,39 | 1,19 | 6,65 | 1,3 | 98 |
| CoNbP | 4,39 | 1,2 | 6,52 | 1,4 | 96 |
| CoNbF | 4,39 | 1,2 | 6,70 | 1,7 | 100 |
| CoNbB | 4,39 | 1,2 | 6,47 | 1,5 | 94 |
| CoNbSi | 4,39 | 1,2 | 6,58 | 1,8 | 97 |
| Ce | 1,14 | 0,2 | 1,76 | 0,1 | 95 |
| CoCe | 1,63 | 0,37 | 2,47 | 0,3 | 94 |

Exemple 11

Sulfuration S2 des catalyseurs (non conforme à l'invention).

On introduit 50 g de catalyseur fraîchement calciné dans un réacteur à lit fixe de catalyseur balayé par un courant de gaz contenant 15% en volume d'$H_2S$ dans l'hydrogène à pression atmosphérique. Pour 50 g de solide on fait passer 2 litres par heure du mélange gazeux et on chauffe le catalyseur à une température de 400°C pendant 10 heures. Cette sulfuration, dénommée S2, est couramment employée en laboratoire et encore parfois de nos jours en milieu industriel.

Les quantités de soufre fixées et les quantités de carbone résiduelles sur les catalyseurs des exemples 2, 3, 8 et 9 sulfurés selon cette méthode S2 sont reportées dans le tableau 2. On constate dans ce tableau que la méthode de sulfuration S2 ne permet d'obtenir que de très faibles taux de sulfuration des catalyseurs contenant le métal du groupe VB, le niobium, ou le métal du groupe des lanthanides, le cérium.

Tableau 2

| Catalyseur | Teneur en S après sulfuration (% pds) | Teneur en C après sulfuration (% pds) | Taux de sulfuration (%) |
|---|---|---|---|
| Nb | 0,85 | <0,05 | 14 |
| CoNb | 1,06 | <0,05 | 16 |
| Ce | 0,2 | <0,05 | 10 |
| CoCe | 0,7 | <0,05 | 26 |

Exemple 12

Sulfuration S3 des catalyseurs (conforme à l'invention).

On imprègne 50 g de catalyseur fraîchement calciné par 23 ml d'une suspension de soufre élémentaire dans le toluène, la dite solution contenant la quantité de poudre de soufre élémentaire (soufre sublimé de chez AUROS, ref. 2012546) correspondant à 120% de la stoechiométrie théorique de la réaction et la quantité de poudre de carbone (carbon NORIT, 211, 660 m2/g de chez AUROS, ref. 4040250) correspondant à 110% de la stoechiométrie théorique basée sur la formation de CoS, $NbS_2$, $Ce_2S_4$ à partir de CoO, $Nb_2O_5$, et $CeO_2$ respectivement selon le type de catalyseur des exemples 2, 3, 8 et 9.

On ferme ensuite l'autoclave et on chauffe à 400°C pendant 10 heures. Après refroidissement, on dépressurise l'autoclave en pompant les gaz qu'il contient, on referme l'autoclave et on le transfère dans une boite à gants sous atmosphère inerte afin de protéger le produit de la réaction de l'oxydation par l'oxygène de l'air. Après ouverture, on récupère les extrudés de couleur noire, que l'on conserve sous gaz inerte en ampoule scellée. Cette sulfuration est dénommée S3.

Les quantités de soufre élémentaire et de poudre de carbone utilisées pour la sulfuration S3 de 50 g de chaque catalyseur sont indiquées dans le tableau 3. Les quantités de soufre fixées et les quantités de carbone résiduelles sur les catalyseurs sulfurés sont également reportées dans le tableau 3. On constate dans ce tableau que la méthode de sulfuration S3 permet d'obtenir un taux de sulfuration très satisfaisant du métal du groupe VB, le niobium, et un taux de sulfuration moyen pour le catalyseur de l'exemple 9 contenant un métal du groupe des lanthanides, le cérium. On notera également que l'utilisation du solvant aromatique, le toluène, conduit à une plus grande quantité de carbone sur les catalyseurs sulfurés.

Tableau 3

| Catalyseur | Quantité de soufre (g/50g cata.) | Quantité de carbone (g/50g cata.) | Teneur en S après sulfuration (% pds) | Teneur en C après sulfuration (% pds) | Taux de sulfuration (%) |
|---|---|---|---|---|---|
| Nb | 3,78 | 0,98 | 5,9 | 3,7 | 100 |
| CoNb | 4,39 | 1,42 | 6,75 | 3,5 | 100 |
| Ce | 1,14 | 0,2 | 1,2 | 4,2 | 65 |
| CoCe | 1,63 | 0,66 | 1,9 | 3,3 | 72 |

Exemple 13

Tests en HDS de gas-oil des catalyseurs

Les catalyseurs des exemples 2 à 9, sulfurés selon les trois méthodes S1, S2 et S3 des exemples ont été comparés en test d'hydrodésulfuration de gas-oil.

Les principales caractéristiques du gas-oil sont données dans le tableau suivant :

| | |
|---|---|
| Densité à 15°C | : 0,856 |
| Indice de Réfraction à 20°C | : 1,4564 |
| Viscosité à 50°C | : 3,72 cSt |
| Soufre | : 1,57%poids |
| Distillation Simulée | |
| PI | : 153°C |
| 5% | : 222°C |
| 50% | : 315°C |
| 95% | : 415°C |
| PF | : 448°C |

Le test d'HDS de gas-oil est mené dans les conditions opératoires suivantes :

| | |
|---|---|
| Pression totale | : 3 MPa |
| Volume de catalyseur | : 40 cm$^3$ |
| Température | : 340°C |
| Débit d'hydrogène | : 20 l/h |
| Débit de charge | : 80 cm$^3$/h |

Pour ces tests, les catalyseurs déjà sulfurés selon les méthodes S1, S2 et S3 ont été chargés dans le réacteur catalytique, puis ensuite mouillés par la charge à une température de 150°C. On élève ensuite la température de l'unité jusqu'à 340°C.

Un test de référence est réalisé pour chaque catalyseur en chargeant dans l'unité de test catalytique le catalyseur et en procédant à une étape de sulfuration en passant la charge de test définie ci-dessus à laquelle on a ajouté 2% poids de diméthyldisulfure (DMDS) dans les conditions du test du tableau ci-dessus, sauf en ce qui concerne la température qui est de 350°C, la dite température étant maintenue pendant 10 heures. Après cette étape, la température est abaissée à la température du test, 340°C, et la charge pure est injectée. Cette méthode de sulfuration est dénommée S0.

Les performances catalytiques des catalyseurs testés sont données dans les tableaux 4 et 5 suivants. Elles sont exprimées en activité d'ordre 1,5. La relation liant l'activité et la conversion (%HDS) est dans ce cas la suivante :

$$\text{Activité} = [100/(100\text{-}\%\text{HDS})]^{0,5} - 1$$

Afin de comparer les activités des catalyseurs Nb, dans le tableau 4, on pose que l'activité du catalyseur monométallique Nb /alumine sulfuré par la méthode S0 est égale à 1.

Tableau 4 Activité des catalyseurs Nb /alumine en hydrodésulfuration de gazole

| Sulfuration | Activité relative Catalyseur | | | | | |
|---|---|---|---|---|---|---|
| | Nb | CoNb | CoNbP | CoNbF | CoNbB | CoNbSi |
| S0 | 1 | 1,5 | - | - | - | - |
| S1 | 3,25 | 8 | 9 | 12 | 8,5 | 10 |
| S2 | 1,05 | 1,5 | - | - | - | - |
| S3 | 2,72 | 7,2 | - | - | - | - |

Afin de comparer les activités des catalyseurs Ce, dans le tableau 5, on pose que l'activité du catalyseur monométallique Ce/alumine sulfuré par la méthode S0 est égale à 1.

Tableau 5 Activité des catalyseurs Ce/alumine en hydrodésulfuration de gazole

|  | Activité relative Catalyseur | |
| --- | --- | --- |
| Sulfuration | Ce | CoCe |
| S0 | 1 | 1,3 |
| S1 | 2,25 | 4,15 |
| S2 | 0,95 | 1,05 |
| S3 | 1,93 | 2,86 |

On constate dans les tableaux 4 et 5 que les performances des catalyseurs sulfurés par le mélange de poudre de soufre élémentaire et de poudre de carbone S1 donnent des résultats d'activité meilleurs que les catalyseurs sulfurés par le mélange du gazole et du DMDS (50) ou sulfuré par l'H2S en phase gazeuse (S2). Les catalyseurs sulfurés par la méthode S3, c'est à dire avec la suspension de soufre élémentaire dans le toluène, donne également une performance meilleure que S0 ou S2. Cet effet pourrait être dû à une meilleure dispersion de la phase sulfure formée grâce à la présence dès le début de la sulfuration de la poudre de carbone qui joue un rôle de réducteur doux comparativement à l'hydrogène habituellement employé comme dans les méthodes de sulfuration S0 et S2. Le procédé de sulfuration de la présente invention permet donc d'obtenir des catalyseurs sulfurés ayant des propriétés catalytiques améliorées. On observera également que les catalyseurs métalliques voient leur activité améliorée par la présence de l'élément du groupe VIII. La méthode de sulfuration de l'invention permet donc d'obtenir également des phases sulfure multimétalliques supportées sur alumine aux propriétés catalytiques améliorées.
On observe également que les catalyseurs contenant l'élément du groupe VB et du groupe VIII voient leur activité améliorée par la présence de l'élément choisi dans le groupe P, B, Si, F.

**Revendications**

1. Procédé de préparation d'un catalyseur comprenant les étapes suivantes :

   a) on forme un mélange réactionnel qui renferme une poudre ou un mélange de poudres contenant au moins un élément choisi parmi le groupe IIIB y compris les lanthanides et les actinides, le groupe IVB et le groupe VB, au moins une matrice poreuse amorphe ou mal cristallisée, et au moins une source de soufre élémentaire et au moins une source de carbone et éventuellement de l'eau,
   b) on maintient le mélange réactionnel obtenu après l'étape a) à une température de chauffage supérieure à 40°C sous une pression supérieure à 0,01 MPa dans un réacteur.

2. Procédé de préparation d'un catalyseur selon la revendication 1 dans lequel le mélange réactionnel formé selon l'étape a) renferme une poudre ou un mélange de poudres qui contient au moins un métal du groupe VIII.

3. Procédé de préparation d'un catalyseur selon la revendication 1 ou la revendication 2 dans lequel le mélange réactionnel formé selon l'étape a) renferme une poudre ou un mélange de poudres qui contient au moins une source d'un élément choisi dans le groupe constitué par le phosphore, le bore et le silicium.

4. Procédé de préparation d'un catalyseur selon l'une des revendications 1 à 3 dans lequel le mélange réactionnel formé selon l'étape a) renferme une poudre ou un mélange de poudres qui contient au moins une source d'anions du groupe VIIA.

5. Procédé de préparation d'un catalyseur selon l'une des revendications 1 à 4 dans lequel ladite matrice poreuse amorphe ou mal cristallisée est associée à un tamis moléculaire zéolithique ou non zéolithique.

6. Procédé de préparation d'un catalyseur selon l'une des revendications 2 à 5 dans lequel le métal du groupe VIII est choisi parmi le fer, le cobalt et le nickel.

7. Procédé de préparation d'un catalyseur selon l'une des revendications 1 à 6 tel que l'étape b) est réalisée dans un réacteur à enceinte fermée.

8. Procédé de préparation d'un catalyseur selon l'une des revendications 1 à 7 tel que la quantité de soufre fixée sur le catalyseur est supérieure à 40 % de la quantité de soufre correspondant à la quantité stoechiométrique de soufre dans les sulfures des éléments IIIB, IVB et VB.

9. Procédé de préparation d'un catalyseur selon l'une des revendications 1 à 8 dans lequel les quantités de réactifs sont telles que le catalyseur renferme en poids :

- 0,01 à 40% d'au moins un métal choisi parmi les éléments des groupes IIIB, IVB et VB,
- 0,1 à 99% d'au moins une matrice choisie dans le groupe constitué par les matrices amorphes et les matrices mal cristallisées
- 0,001 à 30% de soufre,
- 0 à 30% d'au moins un métal choisi parmi les éléments du groupe VIII,
- 0 à 90% d'une zéolithe,
- 0 à 40% d'au moins un élément choisi dans le groupe constitué par le bore, le silicium et le phosphore.
- 0 à 20% d'au moins un élément choisi dans le groupe VIIA.

**Patentansprüche**

1. Verfahren zur Herstellung eines Katalysators, umfassend die folgenden Stufen:

a) man bildet ein Reaktionsgemisch, das ein Pulver oder ein Gemisch von Pulvern einschließt, die wenigstens ein Element enthalten, gewählt aus der Gruppe IIIB, einschließlich der Lanthanide und der Actinide, der Gruppe IVB und der Gruppe VB, wenigstens eine poröse amorphe oder schlecht kristallisierte Matrix und wenigstens eine Elementar-Schwefelquelle und wenigstens eine Quelle von Kohlenstoff und gegebenenfalls Wasser,
b) man hält das nach Stufe a) erhaltene Reaktionsgemisch bei einer Heiztemperatur oberhalb 40°C unter einem Druck oberhalb von 0,01 MPa in einem Reaktor.

2. Verfahren zur Herstellung eines Katalysators nach Anspruch 1, bei dem das bei Stufe a) gebildete Reaktionsgemisch ein Pulver oder ein Gemisch von Pulvern einschließt, das wenigstens ein Metall der Gruppe VIII enthalten.

3. Verfahren zur Herstellung eines Katalysators nach Anspruch 1 oder Anspruch 2, bei dem das bei der Stufe a) gebildete Reaktionsgemisch ein Pulver oder ein Gemisch von Pulvern einschließt, welches wenigstens eine Quelle eines Elements enthält, gewählt aus der Gruppe, die besteht aus Phosphor, Bor und Silizium.

4. Verfahren zur Herstellung eines Katalysators nach einem der Ansprüche 1 bis 3, bei dem das Reaktionsgemisch, das bei Stufe a) gebildet ist, ein Pulver oder ein Gemisch von Pulvern enthält, die wenigstens eine Quelle von Anionen der Gruppe VIIA enthalten.

5. Verfahren zur Herstellung eines Katalysators nach einem der Ansprüche 1 bis 4, bei dem die poröse, amorphe oder schlecht kristallisierte Matrix einem zeolithischen oder nicht zeolithischen Molekularsieb zugeordnet ist.

6. Verfahren zur Herstellung eines Katalysators nach einem der Ansprüche 2 bis 5, bei dem das Metall der Gruppe VIII gewählt ist unter Eisen, Kobalt und Nickel.

7. Verfahren zur Herstellung eines Katalysators nach einem der Ansprüche 1 bis 6, derart, dass die Stufe b) in einem geschlossenem Raum durchgeführt wird.

8. Verfahren zur Herstellung eines Katalysators nach einem der Ansprüche 1 bis 7, derart, dass die auf dem Katalysator fixierte Schwefelmenge über 40% der Schwefelmenge liegt, die der stöchiometrischen Menge an Schwefel in den Sulfiden der Elemente IIIB, IVB und VB entspricht.

9. Verfahren zur Herstellung eines Katalysators nach einem der Ansprüche 1 bis 8, bei dem die Mengen an Reagenzien derart sind, dass der Katalysator an Gewicht einschließt:

- 0,01 bis 40% wenigstens eines Metalls, gewählt unter den Elementen der Gruppen IIIB, IVB und VB,
- 0,1 bis 99% wenigstens einer Matrix, gewählt aus der Gruppe, die besteht aus den amorphen Matrices und den schlecht kristallisierten Matrices,

- 0,01 bis 30% Schwefel,
- 0, bis 30% wenigstens eines Metalls, gewählt unter den Elementen der Gruppe VIII,
- 0 bis 90% eines Zeolithen,
- 0 bis 40% wenigstens eines Elements, gewählt aus der Gruppe, die besteht aus Bor, Silizium und Phosphor,
- 0 bis 20% wenigstens eines Elements, gewählt aus der Gruppe VIIA.

**Claims**

1.  A process for preparing a catalyst comprising the following steps:

    a) forming a reaction mixture which comprises a powder or mixture of powders containing at least one element selected from group IIIB, including the lanthanides and actinides, group IVB, and group VB, at least one porous matrix which is generally an amorphous or low crystallinity oxide type matrix, and at least one source of elemental sulphur, and at least one source of carbon and optionally water;
    b) maintaining the reaction mixture obtained after step a) at a heating temperature of more than 40°C at a pressure of over 0.01 MPa in a reactor.

2.  A process for preparing a catalyst according to claim 1 in which the reaction mixture formed according to step a) comprises a powder or mixture of powders containing at least one metal from group VIII.

3.  A process for preparing a catalyst according to claim 1 or claim 2 in which the reaction mixture formed according to step a) comprises a powder or mixture of powders containing at least one source of an element selected from the group formed by P, B and Si.

4.  A process for preparing a catalyst according to any one of claims 1 to 3 in which the reaction mixture formed according to step a) comprises a powder or mixture of powders containing at least one source of anions from group VIIA.

5.  A process for preparing a catalyst according to any one of claims 1 to 4 in which said porous matrix which is generally an amorphous or low crystallinity oxide type matrix is associated with a zeolitic or non zeolitic molecular sieve.

6.  A process for preparing a catalyst according to any one of claims 2 to 5 in which the metal from group VIII is selected among iron, cobalt and nickel.

7.  A process for preparing a catalyst according to any one of claims 1 to 6 in which step b) is carried out in a closed reactor.

8.  A process for preparing a catalyst according to any one of claims 1 to 7 in which the quantity of sulphur fixed on the catalyst is over 40% of the quantity of sulphur corresponding to the stoechiometric quantity of sulphur in the sulphides of elements IIIB, IVB and VB.

9.  A process for preparing a catalyst according to any one of claims 1 to 8 in which reactants quantity are such that the catalyst comprises by weight :

    • 0.01% to 40% of at least one metal selected from elements from groups IIIB, IVB and VB;
    • 0.1% to 99% of at least one support selected from the group formed by amorphous matrices and low crystallinity matrices;
    • 0.001% to 30% of sulphur;
    • 0 to 30% of at least one group VIII metal;
    • 0 to 90% of a zeolite;
    • 0 to 40% of at least one element selected from the group formed by boron, silicon and phosphorous;
    • 0 to 20% of at least one element selected from group VIIA.